# EUROPEAN PATENT APPLICATION

(11) **EP 2 582 164 A1**
(43) Date of publication of application: **17.04.2013**
(21) Application number: 11777224.4
(22) Date of filing: 20.05.2011
(51) Int. Cl.: H04W 8/24, H04W 12/04, H04W 88/16, H04W 88/08

(54) **METHOD, APPARATUS AND SYSTEM FOR SECURITY PROCESSING IN SWITCH PROCESS**

(30) Priority: 15.07.2010 CN 201010229797
(71) Applicant: Huawei Technologies Co., Ltd., Shenzhen, Guangdong 518129 (CN)
(72) Inventor: ZHANG, Dongmei, Shenzhen Guangdong 518129 (CN); JIAO, Bin, Shenzhen Guangdong 518129 (CN); LIU, Xiaohan, Shenzhen Guangdong 518129 (CN); CHEN, Jing, Shenzhen Guangdong 518129 (CN); ZHANG, Aiqin, Shenzhen Guangdong 518129 (CN)
(74) Representative: Thun, Clemens
(86) International application number: PCT/CN2011/074418
(87) International publication number: WO 2011/137805

(57) **Abstract**

A method, an apparatus, and a system for security processing in a handover process in the field of communication technologies are provided, including: in a handover preparation and handover execution processes performed by a user equipment UE and a source node and a target node on a network side, obtaining, by the target node, security capability information of the UE provided by the source node or a security verification entity, where the security verification entity includes a gateway in case of UE handover under a NodeB or a donor NodeB in case of UE handover under a relay node; and if the source node provides the security capability information of the UE, the method further includes: sending a path modification ACK message to the target node if the security verification entity verifies that the security capability information of the UE carried in the path modification request message is consistent with locally stored security capability information of the UE. Embodiments of the present invention ensure that the target node can select appropriate security algorithms, thus further improving security of the optimized handover process.

## Description

This application claims priority to Chinese Patent Application No. 201010229797.4, filed with the Chinese Patent Office on July 15, 2010 and entitled "METHOD, APPARATUS, AND SYSTEM FOR SECURITY PROCESSING IN HANDOVER PROCESS", which is incorporated herein by reference in its entirety.

### FIELD OF TECHNOLOGY

The present invention relates to the field of network communication technologies, and in particular, to a technology for security processing in a handover process.

### BACKGROUND

In a long term evolution (Long Term Evolution, LTE) system, a terminal device can access a mobility management entity (Mobility Management Entity, MME) in a core network through an access device. The access device may be a home evolved NodeB (Home Evolved NodeB, HeNB), a donor evolved NodeB (Donor evolved NodeB, DeNB), or a relay, and so on. The HeNB may need a home evolved NodeB gateway (Home Evolved NodeB Gate Way, HeNB GW), so that the HeNB can find a route to an appropriate MME.

In practical use cases, a user equipment (User Equipment, UE) may be handed over between two HeNB GWs or between Relays. In a handover process, handover signaling is usually terminated on the MME, that is, the MME needs to participate in the handover process and perform security processing in the handover process to ensure forward security and backward security of the handover.

In some use cases (for example, in an enterprise network and a Relay system), to reduce the signaling processing pressure on the MME, an optimized handover is proposed, that is, handover signaling is terminated on the HeNB GW or DeNB, and not terminated on the MME.

During the implementation of the present invention, the inventors find that the optimized handover can avoid or reduce information exchange between the MME and the access device, but the prior art does not provide a solution for security processing in the optimized handover process.

### SUMMARY

Embodiments of the present invention provide a method, an apparatus, and a system for security processing in a handover process, which provide solutions for security processing for an optimized handover.

An embodiment of the present invention provides a method for security processing in a handover process, including:
in a handover preparation and handover execution processes performed by a user equipment UE and a source node and a target node on a network side, obtaining, by the target node, security capability information of the UE provided by the source node or a security verification entity, where the security verification entity includes a gateway in case of UE handover under a NodeB or a donor NodeB in case of UE handover under a relay node; and
if the target node obtains the security capability information of the UE provided by the source node, the method further includes:
   sending, by the target node, a path modification request message to the security verification entity, where the path modification request message carries the obtained security capability information of the UE; and sending, by the security verification entity, a path modification ACK message to the target node if the security verification entity verifies that the security capability information of the UE carried in the path modification request message is consistent with locally stored security capability information of the UE.

An embodiment of the present invention provides a security verification entity, where the security verification entity is a gateway in case of UE handover under a NodeB or a donor NodeB in case of UE handover under a relay node; and the security verification entity includes:
a receiving unit, configured to receive a path modification request message sent by a target node, where the path modification request message carries security capability information of the UE provided by a source node to the target node;
a verifying unit, configured to verify whether the security capability information of the UE carried in the path modification request message is consistent with locally stored security capability information of the UE; and
a sending unit, configured to send a path modification ACK message to the target node if it is verified that the security capability information of the UE carried in the path modification request message is consistent with the locally stored security capability information of the UE.

An embodiment of the present invention provides a system for security processing in a handover process, where the system includes a source node, a target node, and the above security verification entity;
the target node obtains security capability information of a UE provided by the source node in a handover preparation and handover execution process; and
the security verification entity compares the security capability information of the UE provided by the source node with locally stored security capability information of the UE to verify whether the security capability information of the UE provided by the source node is secure.

An embodiment of the present invention provides a security verification entity, where the security verification entity is a gateway in case of UE handover under a NodeB or a donor NodeB in case of UE handover under a relay node; and the security verification entity includes:
a receiving unit, configured to receive a handover request message sent by a source node;
   and
a forwarding unit, configured to forward the handover request message to a target node, and carry security capability information of the UE locally stored by the security verification entity in the forwarded handover request message.

An embodiment of the present invention provides a system for security processing in a handover process, where the system includes a source node, a target node, and the above security verification entity; and
the security verification entity provides security capability information of a UE to the target node in a handover preparation process.

As seen from the technical solutions provided by the embodiments of the present invention, in the embodiments of the present invention, in an optimized handover process, the target node obtains reliable security capability information of the UE provided by the security verification entity, or the target node obtains security capability information of the UE provided by the source node and then the security verification entity verifies the security capability information of the UE provided by the source node, ensuring credibility of the security capability information of the UE sent by the source node. Therefore, the target node can select appropriate security algorithms, thus further improving security of the optimized handover process.

### BRIEF DESCRIPTION OF THE DRAWING(S)

To illustrate the technical solutions in embodiments of the present invention or in the prior art more clearly, the accompanying drawings required for describing the embodiments or the prior art are briefly described hereunder. Apparently, the accompanying drawings in the following descriptions merely show some embodiments of the present invention, and persons of ordinary skill in the art may obtain other drawings from the accompanying drawings without creative efforts.
FIG. 1 is a schematic diagram of a method for security processing in a handover process according to embodiment 1 of the present invention;
FIG. 2 is a flowchart of a method for security processing in a handover process according to instance 1 of the present invention;
FIG. 3 is a flowchart of a method for security processing in a handover process according to instance 2 of the present invention;
FIG. 4 is a flowchart of a method for security processing in a handover process according to instance 5 of the present invention;
FIG. 5 is a flowchart of a method for security processing in a handover process according to instance 6 of the present invention;
FIG. 6 is a flowchart of a method for security processing in a handover process according to instance 7 of the present invention;
FIG. 7 is a schematic structural diagram of a security verification entity according to embodiment 2 of the present invention;
FIG. 8 is another schematic structural diagram of a security verification entity according to embodiment 2 of the present invention;
FIG. 9 is still another schematic structural diagram of a security verification entity according to embodiment 2 of the present invention;
FIG. 10 is a schematic structural diagram of a security verification entity according to embodiment 4 of the present invention;
FIG. 11 is another schematic structural diagram of a security verification entity according to embodiment 4 of the present invention;
FIG. 12 is still another schematic structural diagram of a security verification entity according to embodiment 4 of the present invention; and
FIG. 13 is still another schematic structural diagram of a security verification entity according to embodiment 4 of the present invention.

### DETAILED DESCRIPTION

Exemplary embodiments will be described to explain the implementation process of the present invention. Evidently, the embodiments described herein are only a part rather than all of the embodiments of the present invention. All other embodiments obtained by persons of ordinary skill in the art based on the embodiments of the present invention without creative efforts shall fall within the protection scope of the present invention.

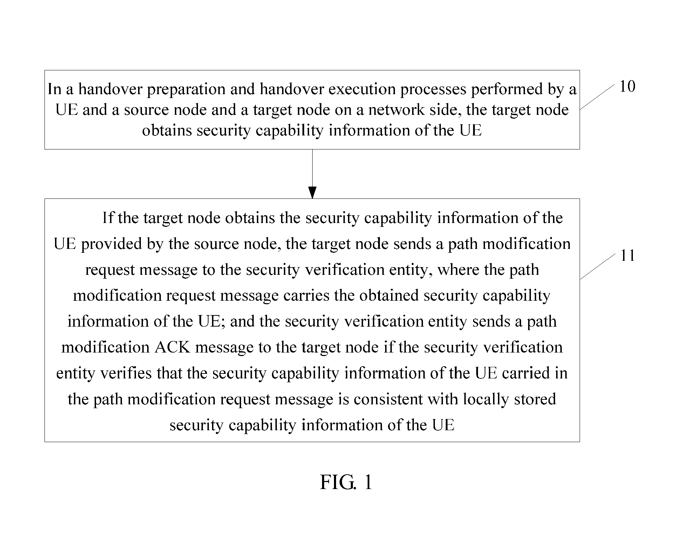

An embodiment of the present invention provides a method for security processing in a handover process. As shown in FIG. 1, the method includes the following steps:
Step 10: in a handover preparation and handover execution processes performed by a UE and a source node and a target node on a network side, the target node obtains security capability information of the UE.

A security verification entity in the embodiment of the present invention includes a gateway in case of UE handover under a NodeB, for example, an HeNB GW, or a donor NodeB in case of UE handover under a relay node, for example, an HeNB; the source node and target node in the embodiment include: a NodeB in case of UE handover under a NodeB, for example, an HeNB, or a relay in case of UE handover under a relay.

To be specific, the method in the embodiment of the present invention is applicable to both the UE handover under a relay and the UE handover under a NodeB.

In addition, in the handover preparation and handover execution process performed by the source node and target node, the source node may send the handover request message to the target node through the security verification entity; the target node sends the handover response message to the source node through the security verification entity. The source node may also directly communicate with the target node to transfer the handover request message and handover response message.

The security capability information of the UE obtained by the target node is provided by the source node or security verification entity; if the source node provides the security capability information of the UE to the target node, step 11 is executed.

Step 11: the target node sends a path modification request message to the security verification entity, where the path modification request message carries the obtained security capability information of the UE; and the security verification entity sends a path modification ACK message to the target node if the security verification entity verifies that the security capability information of the UE carried in the path modification request message is consistent with locally stored security capability information of the UE.

Alternatively, the path modification ACK message sent by the security verification entity carries fresh security parameters reserved for a next handover, and the target node stores the fresh security parameters.

If the security capability information of the UE carried in the path modification request message is inconsistent with the security capability information of the UE locally stored by the security verification entity, an alarm process is started.

If the security verification entity provides the security capability information of the UE to the target node, the operation may be ended.

The method for providing security capability information of the UE by the security verification entity includes: forwarding, by the security verification entity, the handover request message sent by the source node to the target node, where the forwarded handover request message carries security capability information of the UE locally stored by the security verification entity. The security capability information of the UE locally stored by the security verification entity is obtained in the following way:
(1) The security verification entity obtains security capability information of the UE from a handover message sent by the core network node to the security verification entity, for example, the UE initially accesses a node not under the security verification entity, and then is handed over to a node under the security verification entity, and therefore, the handover message sent by an MME to the node under the security verification entity carries security capability information of the UE. The security verification entity obtains the security capability information of the UE from the handover message. A specific instance is as follows: the UE initially accesses an eNB, and then is handed over to an HeNB. Therefore, in the process of a UE handover from the eNB to the HeNB, the MME carries security capability information of the UE in the handover message sent to the HeNB, and the HeNB GW may obtain security capability information of the UE from the handover message;
   or
(2) the security verification entity obtains the security capability information of the UE from an initial context setup request message sent by the core network node, for example, the UE directly accesses a node under the security verification entity, and the security verification entity obtains the security capability information of the UE from the initial context setup request message sent by the MME.

The handover request message forwarded by the security verification entity further includes: a security algorithm used by the source node, and a new access stratum root key and a corresponding NCC calculated by the source node.

The forwarded handover request message may further include: a new access stratum root key and a corresponding NCC' calculated by the security verification entity according to fresh security parameters; or the forwarded handover request message includes fresh security parameters provided by the security verification entity.

If the forwarded handover request message includes a new access stratum root key and a corresponding NCC' calculated by the security verification entity according to fresh security parameters, the target node stores the new access stratum root key calculated by the security verification entity according to fresh security parameters, in association with the corresponding NCC', where the fresh security parameters include a fresh next-hop chaining counter (NCC, next-hop chain counter) and a next hop (NH, nexthop) value. The method for calculating a new access stratum root key by the security verification entity according to fresh security parameters includes: calculating, by the security verification entity, the new access stratum root key according to a physical cell identity (PCI, physical cell identity) of a cell of the target node, a downlink E-UTRA absolute radio frequency channel number (DL-EARFCN, down-link E-UTRA absolute radio frequency channel number) of the cell of the target node, and the NH in the fresh {NCC, NH} pair, where the PCI and DL-EARFCN of the target node are obtained from the handover request message sent by the source node, or the PCI of the cell of the target node is obtained from the handover request message sent by the source node, and the DL-EARFCN is obtained locally according to the PCI obtained from the handover request message.

If the forwarded handover request message includes the fresh security parameters provided by the security verification entity, the target node calculates a new access stratum root key according to the fresh security parameters carried in the handover request message.

No matter whether the security verification entity carries fresh security parameters reserved for the next handover in the sent path modification ACK message, or the security verification entity calculates a new access stratum root key and a corresponding NCC' according to fresh security parameters, or the forwarded handover request message includes fresh security parameters provided by the security verification entity, the security verification entity needs to obtain the fresh security parameters. The method for obtaining the fresh security parameters by the security verification entity in the embodiment of the present includes:
(1) Sending, by the security verification entity, a UE security context request message to a core network node, where the message includes a UE identity; and
   receiving a UE security context response message sent by the core network node, where the UE security context response message includes a fresh NCC and NH and an input parameter KASME required for calculating the fresh NH, or includes an NCC and NH currently used by the UE and an input parameter KASME required for calculating the fresh NH; and obtaining the fresh NCC by calculation according to the NCC currently used by the UE, and obtaining the fresh NH by calculation according to the NH currently used by the UE and the KASME.
(2) Storing, by the security verification entity, a non-fresh NCC and NH, and sending a UE security context request message to a core network node, where the message includes a UE identity; receiving a UE security context response message sent by the core network node, where the UE security context response message includes an input parameter KASME required for calculating the fresh NH; storing the KASME; and obtaining the fresh NCC by calculation according to the non-fresh NCC, and obtaining the fresh NH by calculation according to the non-fresh NH and KASME, where the stored non-fresh NCC and NH are obtained by the security verification entity from a path modification ACK message or handover request message sent by the core network node in a previous handover process that the core network node participates in;
   or
   storing, by the security verification entity, a non-fresh NCC and NH, and an input parameter KASME required for calculating the fresh NH, calculating the fresh NCC according to the non-fresh NCC, and obtaining the fresh NH by calculation according to the non-fresh NH and KASME, where the stored non-fresh NCC and NH are obtained by calculation by the security verification entity in a previous handover process of the UE.
(3) Using, by the fresh security parameters, NCC values and corresponding NH values in ascending order of NCC values from an {NCC, NH} list stored by the security verification entity; and after all NCCs and NHs in the {NCC, NH} list are used, or when no fresh NCC or NH exists in the security verification entity, obtaining, by the security verification entity, the {NCC, NH} list, where the method for obtaining the {NCC, NH} list by the security verification entity includes:
   sending, by the security verification entity, a UE security context request message to a core network node, where the message includes a UE identity;
   receiving a UE security context response message sent by the core network node, where the UE security context response message includes an {NCC, NH} list, where the {NCC, NH} list includes the current NCC and NH of the core network node, and NCCs of a first next hop, ..., an n^{th} next hop and corresponding NHs calculated by the core network node, where n is a natural number greater than 1; and
   storing, by the security verification entity, the {NCC, NH} list.

If the {NCC, NH} list stored by the security verification entity includes unused fresh security parameters, the UE executes a normal handover that the core network node participates in, and therefore, the core network node uses locally stored newest security parameters to perform security processing, and synchronizes with the newest security parameters of the UE through a handover command.
(4) Intercepting, by the security verification entity in a security processing process of a previous optimized handover, the fresh security parameters from a path modification ACK message sent by the core network node to the target node. To be specific, for the process of security processing in the currently executed optimized handover, after completion of the handover, the security verification entity forwards a path modification request message of the target node to the core network node, and intercepts the fresh security parameters from the path modification ACK message sent by the core network node to the target node and stores the parameters locally without sending the parameters to the target node, where the parameters may be used in the process of security processing in the next optimized handover.

In the embodiment of the present invention, in an optimized handover process, the target node obtains reliable security capability information of the UE provided by the security verification entity, or the target node obtains security capability information of the UE provided by the source node and then the security verification entity verifies the security capability information of the UE provided by the source node and triggers an alarm, ensuring credibility of the security capability information of the UE sent by the source node. Therefore, the target node can select appropriate security algorithms, thus further improving security of the optimized handover process.

For understanding the method in the above embodiment, the following describes the above embodiment in detail by using a specific application scenario.

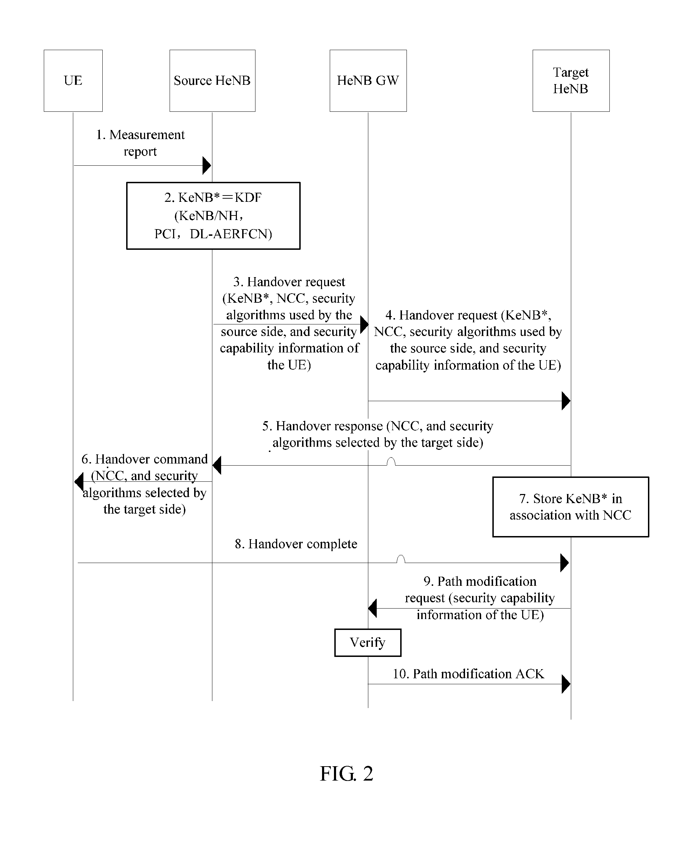

The scenario of instance 1 is a method for security processing in a UE handover process based on an X2 interface under an HeNB, where the procedure of the method is shown in FIG. 2 and includes the following steps:
Step 1: the UE sends a measurement report message to the source HeNB.
Step 2: the source HeNB checks whether locally stored fresh security parameters of the UE exist, such as a fresh NCC and NH; if fresh security parameters of the UE exist, the source HeNB calculates a new access stratum root key KeNB* according to the NH in the fresh security parameters; otherwise, the HeNB calculates the KeNB* according to the old access stratum key KeNB.

The fresh security parameters are unused security parameters, including unused NCCs and NHs.

The process of calculating a new KeNB* by the source HeNB in step 2 may be described as:
KeNB* = KDF (KeNB/NH, PCI, DL-AERFCN), where KDF (*) indicates a key derivation function, KeNB/NH, PCI, and DL-AERFCN are input parameters of the key derivation function, PCI represents a target cell identity, and DL-AERFCN represents a downlink E-UTRA absolute (radio frequency) channel number (down-link E-UTRA absolute radio frequency channel number) of the target cell.

A specific example of step 2 is as follows: if multiple consecutive optimized handovers exist, in the first optimized handover, because the source HeNB locally stores fresh security parameters of the UE, the KeNB* may be obtained by calculation by using KDF (NH, PCI, DL-AERFCN), while in the subsequent optimized handover process, because the source HeNB does not locally store the fresh security parameters of the UE, the KeNB* is obtained by calculation by using KDF (KeNB, PCI, DL-AERFCN).

Step 3: the source HeNB sends a handover request message to the HeNB GW, where the handover request message includes a KeNB*, an NCC, security algorithms used by the source HeNB (including an integrity protection algorithm and an encryption algorithm), and security capability information of the UE.

The NCC in the handover request message is an NCC paired with the NH corresponding to the KeNB*, that is, if a fresh NH is used to calculate the KeNB*, the NCC in the handover request message is an NCC paired with the fresh NH; if the KeNB is used to calculate the KeNB*, the NCC in the handover request message is an NCC paired with the NH for calculating the KeNB. The corresponding NCCs in the following embodiments are all based on the corresponding relationship in this section.

Step 4: the HeNB GW determines, according to the target cell information, that optimized handover processing is required, and therefore the HeNB GW forwards the received handover request message to the target HeNB.

To be specific, the HeNB GW determines that the handover is a handover in which handover signaling is terminated on the HeNB GW and both the source HeNB and the target HeNB belong to the HeNB GW.

The forwarded handover request message includes a KeNB*, an NCC, security algorithms used by the source HeNB (including an integrity protection algorithm and an encryption algorithm), and security capability information of the UE.

Step 5: the target HeNB sends a corresponding handover response message to the source HeNB through the HeNB GW after receiving the handover request message, where the handover response message includes an NCC, and security algorithms (including an integrity protection algorithm and an encryption algorithm) selected by the target HeNB. The NCC included in the handover response message is the same as the NCC included in the handover request message.

Step 6: the source HeNB sends a handover command message to the UE after receiving the handover response message, where the handover command message includes an NCC, an integrity protection algorithm selected by the target HeNB, an encryption algorithm selected by the target HeNB, and so on.

The NCC included in the handover command message is the same as the NCC included in the handover response message.

Step 7: the target HeNB uses the KeNB* included in the received handover request message as a KeNB, and stores the KeNB* in association with the NCC, where the NCC is the NCC included in the handover request message.

It should be noted that the time for executing step 7 is very flexible. To be specific, step 7 may be executed at any time after step 4 and before ending of the security processing. The embodiment does not limit the specific time for executing step 7.

Step 8: the UE sends an integrity-protected and encryption-protected handover complete message to the target HeNB after receiving the handover command message.

The UE compares the NCC included in the handover command message with the local NCC after receiving the handover command message; if the two NCCs are different, the UE updates the local NH according to the NCC included in the handover command message, and uses the updated NH to obtain the KeNB* by calculation; if the two NCCs are the same, the UE uses the local KeNB to obtain the KeNB* by calculation. Afterward, the UE uses the KeNB* to derive access stratum keys (including an access stratum encryption key and an access stratum integrity protection key), uses the access stratum encryption key derived from the KeNB* and the encryption algorithm selected by the target HeNB to encrypt the handover complete message, uses the KeNB* to derive an access stratum integrity protection key, and uses the integrity protection algorithm selected by the target HeNB to integrity-protect the handover complete message.

Step 9: the target HeNB sends a path modification request message to the HeNB GW after receiving the handover complete message. The path modification request message includes security capability information of the UE. The security capability information of the UE may be obtained by the target HeNB from the received handover request message in step 5.

After the target HeNB receives the handover complete message, the handover preparation and handover execution process is complete.

Step 10: the HeNB GW determines, according to the received path modification request message, that optimized handover processing is required, and therefore, the HeNB GW compares the security capability information of the UE included in the path modification request message with the locally stored security capability information of the UE; if consistent, the HeNB GW does not update the locally stored NCC and NH, and the HeNB GW sends a path modification ACK message to the target HeNB, where the message includes no NCC and NH. Otherwise, the HeNB GW triggers an alarm to indicate that the security capability information of the UE is changed.

Instance 1 is described by using the HeNB and HeNB GW as examples. The method for security processing described in the instance is also applicable to the application scenario of the Relay and DeNB, which is not further described herein.

As seen from the description of the above instance 1, the target HeNB knows only the KeNB* sent by the source HeNB, while non-invertibility of the key derivation function ensures that the target HeNB is unable to inversely derive the key KeNB of the source HeNB according to the KeNB*, thus implementing backward security (that is, the target HeNB is unable to derive, according to the received key, the key used by the source side of the handover); because the HeNB GW verifies the security capability information of the UE, triggers an alarm, and performs other operations, security of the cell is ensured to some extent without requiring the MME to participate in the optimized handover process; therefore, instance 1 provides a solution for security processing for the optimized handover.

### Instance 2

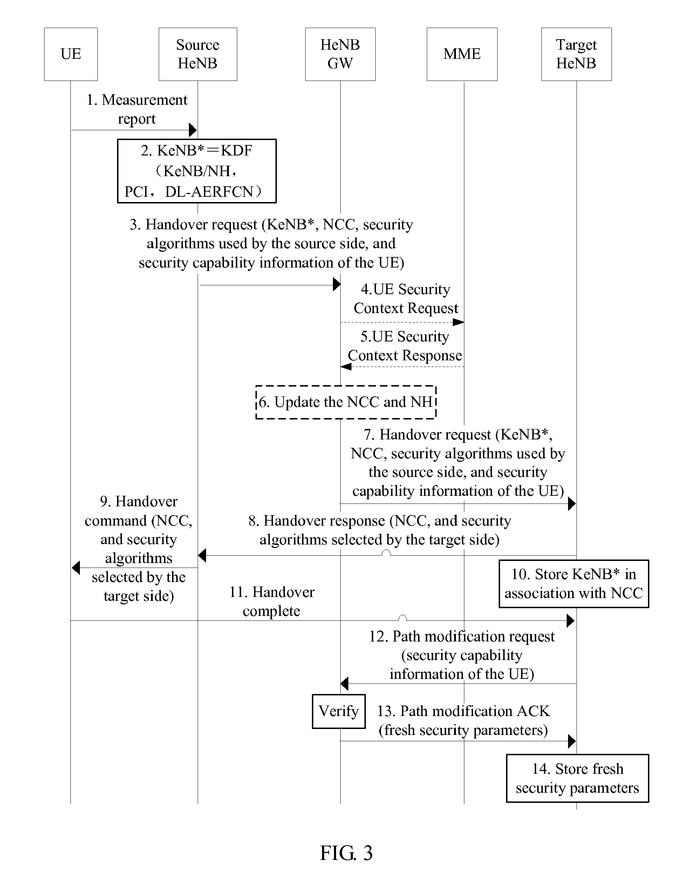

Scenario: a method for security processing in a UE handover process based on an X2 interface under an HeNB. No direct X2 interface exists between the source HeNB and the target HeNB in the instance, and the HeNB GW needs to forward an X2 message between the source HeNB and the target HeNB. As shown in FIG. 3, the procedure of the method includes the following steps:
Step 1 to step 3 are the same as those in instance 1, and are not further described herein.
Step 4: the HeNB GW determines, according to the target cell information, that optimized handover processing is required; if the HeNB GW locally stores fresh security parameters of the UE, the procedure directly goes to step 7; if the HeNB GW does not locally store fresh security parameters of the UE, the HeNB GW sends a UE Security Key Request (UE security context request) message to the MME, where the message includes a UE identity, requesting to obtain security parameters of the UE and a key KASME.

In step 4, there are many methods for the HeNB GW to determine that no local fresh security parameter of the UE exists, a specific example of which is as follows: if the HeNB GW determines that no security parameter of the UE is locally stored, the HeNB GW determines that no local fresh security parameter of the UE exists; if the HeNB GW determines that security parameters of the UE are locally stored and that the NCC in the security parameters of the UE is smaller than the NCC carried in the handover request message sent by the source HeNB, the HeNB GW determines that no local fresh security parameter of the UE exists. The embodiment does not limit the specific implementation for the HeNB GW to determine that no local fresh security parameter of the UE exists.

Step 5: the MME returns a UE Security Key Response (UE security context response) message, where the UE security context response message may include security parameters of the UE. The security parameters of the UE in the UE security context response message may include fresh security parameters (such as a fresh NCC and a fresh NH) of the UE; or may also be security parameters currently used by the UE, that is, the security parameters of the UE under the source HeNB may further include an input parameter, key of access security management entity (Key of Access Security Management Entity, KASME), which is required for calculating the fresh NH.

Step 6: if the security parameters of the UE included in the UE security context response message returned by the MME to the HeNB GW are security parameters currently used by the UE, the HeNB GW performs NCC+1 calculation according to the NCC in the UE security context response message, and performs calculation according to the NH and key KASME in the UE security context response message to obtain a new NH, where the new NH is marked as NH'. Herein the NCC+1 and NH' are used for the next optimized handover of the UE.

If the security parameters of the UE included in the UE security context response message returned by the MME to the HeNB GW are fresh security parameters of the UE, the procedure directly goes to step 7. The fresh security parameters included in the UE security context response message are used for the next optimized handover of the UE.

It should be noted that the time for executing step 4, step 5, and step 6 is very flexible, and may be set at any position after step 3 and before step 13. The embodiment does not limit the specific positions of step 4, step 5, and step 6.

Step 7: the HeNB GW forwards a handover request message to the target HeNB, where the forwarded handover request message includes a KeNB*, an NCC, security algorithms used by the source HeNB (including an integrity protection algorithm and an encryption algorithm), and security capability information of the UE. Herein the security capability information of the UE is security capability information of the UE carried in the handover request message sent by the source HeNB in step 3.

Step 8 to step 12 are the same as step 5 to step 9 in instance 1, and are not further described herein.

Step 13: the HeNB GW determines that the current handover is an optimized handover, and therefore the HeNB GW compares the security capability information of the UE included in the path modification request message with the locally stored security capability information of the UE; if they are consistent, the HeNB GW sends a path modification ACK message including fresh security parameters (such as NCC+1 and NH') of the UE to the target HeNB; otherwise, the HeNB GW triggers an alarm, indicating that the security capability information of the UE is changed.

Step 14: the target HeNB stores the NCC+1 and NH' included in the path modification ACK message.

Instance 2 is described by using the HeNB and HeNB GW as examples. The method for security processing described in the instance is also applicable to the application scenario of the Relay and DeNB, which is not further described herein.

After the optimized handover, the UE executes a first normal handover that the MME participates in, or during communication with the MME, the HeNB GW needs to send the locally stored newest security parameters to the MME through a UE security context inform message (UE Security Context inform) to complete synchronization of security parameters. An example of defining a UE security context inform message is as follows: MME UE S1AP ID, eNB UE S1AP ID, NCC, and NH; the message may further include UE security capabilities, a NAS encryption algorithm, an integrity protection algorithm, an uplink/downlink NAS COUNT value, and so on. The MME returns a UE security context inform ACK after receiving the message. An example of defining the UE security context inform ACK message is as follows:
UE security context inform ACK:
   MME UE S1AP ID, eNB UE S1AP ID.

As seen from the description of the above instance 2, the target HeNB knows only the KeNB* sent by the source HeNB, while non-invertibility of the key derivation function ensures that the target HeNB is unable to inversely derive the key KeNB of the source HeNB according to the KeNB*, thus implementing backward security (that is, the target HeNB is unable to derive, according to the received key, the key used by the source side of the handover); in addition, the target HeNB serves as the source HeNB of the next handover in the next handover, and the target HeNB uses the obtained fresh security parameters to derive a new access stratum root key, while the source HeNB of the current handover is unable to know the new access stratum root key, thus implementing forward security. In the instance, the HeNB GW requests the MME for a UE security context, and the HeNB GW performs updating and delivering of the NCC and NH, thus ensuring security during a handover while reducing the security processing operations in the optimized handover process that the MME participates in; because the HeNB GW verifies the security capability information of the UE, triggers an alarm, and performs other operations, credibility of the UE security capabilities sent by the source cell is ensured; therefore, instance 2 provides a solution for security processing for the optimized handover.

### Instance 3

The scenario of instance 3 is similar to the scenario of instance 2. The operation of instance 3 differs from the operation of instance 2 in that step 4 to step 6 are replaced by the following steps. Only the different steps in instance 3 are described.

Step 4: the HeNB GW determines, according to the received handover request message, that optimized handover processing is required; if the HeNB GW locally stores fresh security parameters of the UE, the procedure may directly go to step 7.

If the HeNB GW locally stores a non-fresh NCC and NH, the HeNB GW sends a UE Security Key Request (UE security context request) message to the MME, where the message includes a UE identity, requesting to obtain security parameters of the UE and a key KASME.

The non-fresh NCC and NH locally stored by the HeNB GW are obtained by the security verification entity from a path modification ACK message or handover request message sent by the MME in a previous handover process that the MME participates in.

There are many methods for the HeNB GW to determine that no local fresh security parameter of the UE exists, a specific example of which is as follows: if the HeNB GW determines that no security parameter of the UE is locally stored, the HeNB GW determines that no local fresh security parameter of the UE exists; if the HeNB GW determines that security parameters of the UE are locally stored and that the NCC in the security parameters of the UE is smaller than the NCC carried in the handover request message sent by the source HeNB, the HeNB GW determines that no local fresh security parameter of the UE exists. The embodiment does not limit the specific implementation for the HeNB GW to determine that no local fresh security parameter of the UE exists.

Step 5: the MME returns a UE Security Key Response (UE security context response) message to the HeNB GW, where the UE security context response message may include an input parameter KASME required for calculating the fresh NH.

Step 6: the HeNB GW stores the KASME, performs NCC+1 calculation according to the non-fresh NCC locally stored to obtain a fresh NCC+1, and performs calculation according to the NCC+1, non-fresh NH, and KASME to obtain a new NH, where the new NH is marked as NH'. Herein the NCC+1 and NH' are used for the next optimized handover of the UE.

In the next optimized handover process of the UE, the NCC, NH, and KASME of the UE are already stored in the HeNB GW. In this case, the NCC and NH are obtained by calculation by the HeNB GW in the current handover process. Therefore, the HeNB GW performs NCC+1 calculation according to the non-fresh NCC to obtain a fresh NCC+1, and performs calculation according to the NCC+1, non-fresh NH, and KASME to obtain a new NH. In other words, in step 4, if the HeNB GW determines that the non-fresh NCC, NH, and KASME are stored, the non-fresh NCC and NH are obtained by calculation by the HeNB GW in the previous handover process of the UE, and the KASME may also be obtained by the HeNB GW by sending a security context request to the MME in a handover process before the current handover.

Instance 3 is described by using the HeNB and HeNB GW as examples. The method for security processing described in the instance is also applicable to the application scenario of the Relay and DeNB, which is not further described herein.

As seen from the description of the above instance 3, the target HeNB knows only the KeNB* sent by the source HeNB, while non-invertibility of the key derivation function ensures that the target HeNB is unable to inversely derive the key KeNB of the source HeNB according to the KeNB*, thus implementing backward security (that is, the target HeNB is unable to derive, according to the received key, the key used by the source side of the handover); in addition, the target HeNB serves as the source HeNB of the next handover in the next handover, and the target HeNB uses the obtained fresh security parameters to derive a new access stratum root key, while the source HeNB of the current handover is unable to know the new access stratum root key, thus implementing forward security. In the instance, the HeNB GW requests the MME for a UE security context, and the HeNB GW performs updating and delivering of the NCC and NH, thus ensuring security during a handover while reducing the security processing operations in the optimized handover process that the MME participates in; because the HeNB GW verifies the security capability information of the UE, triggers an alarm, and performs other operations, credibility of the UE security capabilities sent by the source cell is further ensured; therefore, instance 3 provides a solution for security processing for the optimized handover.

### Instance 4

The scenario of instance 4 is similar to the scenario of instance 2. The operation of instance 4 differs from the operation of instance 2 in that step 4 to step 6 are replaced by the following steps. Only the different steps in instance 4 are described.

Step 4: the HeNB GW determines, according to the received handover request message, that optimized handover processing is required; if the HeNB GW locally stores fresh security parameters of the UE, the procedure may directly go to step 7.

If the HeNB GW does not store a fresh NCC and NH locally, the HeNB GW sends a UE Security Key Request (UE security context request) message to the MME, where the message includes a UE identity.

There are many methods for the HeNB GW to determine that no local fresh security parameter of the UE exists, a specific example of which is as follows: if the HeNB GW determines that no security parameter of the UE is locally stored, the HeNB GW determines that no local fresh security parameter of the UE exists; if the HeNB GW determines that security parameters of the UE are locally stored and that the NCC in the security parameters of the UE is smaller than the NCC carried in the handover request message sent by the source HeNB, the HeNB GW determines that no local fresh security parameter of the UE exists. The embodiment does not limit the specific implementation for the HeNB GW to determine that no local fresh security parameter of the UE exists.

Step 5: the MME returns a UE Security Key Response (UE security context response) message to the HeNB GW, where the UE security context response message includes an {NCC, NH} list, where the {NCC, NH} list includes the current NCC and NH of the MME, and NCC+1, NH1, NCC+2, NH2, ..., NCC+n of the nth next hop and the corresponding NHn calculated by the MME, where n is a natural number greater than 1.

Step 6: the HeNB GW stores the {NCC, NH} list, and uses NCC values and corresponding NH values in ascending order of NCC values in every handover process; and after all NCCs and NHs in the {NCC, NH} list are used, the HeNB GW resends the UE security context request message to the MME, and receives a UE security context response message sent by the MME. If there are only a few optimized handovers, and the local fresh {NCC, NH} values of the HeNB GW are not used up, the local NCC of the MME is definitely greater than the NCC of the HeNB GW. In the next normal handover that the MME participates in, the MME may directly use the local newest NCC and NH to perform security processing. By delivering the newest NCC in a handover command, the UE and the MME can complete synchronization of NHs.

Instance 4 is described by using the HeNB and HeNB GW as examples. The method for security processing described in the instance is also applicable to the application scenario of the Relay and DeNB, which is not further described herein.

As seen from the description of the above instance 4, the target HeNB knows only the KeNB* sent by the source HeNB, while non-invertibility of the key derivation function ensures that the target HeNB is unable to inversely derive the key KeNB of the source HeNB according to the KeNB*, thus implementing backward security (that is, the target HeNB is unable to derive, according to the received key, the key used by the source side of the handover); in addition, the target HeNB serves as the source HeNB of the next handover in the next handover, and the target HeNB uses the obtained fresh security parameters to derive a new access stratum root key, while the source HeNB of the current handover is unable to know the new access stratum root key, thus implementing forward security. In the instance, the HeNB GW requests the MME for a UE security context, and the MME delivers the {NCC, NH} list without delivering a KASME, thus reducing security processing operations in the optimized handover process that the MME participates in. Meanwhile, the HeNB GW requests the MME for a UE security context, and the HeNB GW performs updating and delivering of the NCC and NH, thus ensuring security during a handover while reducing the security processing operations in the optimized handover process that the MME participates in; because the HeNB GW verifies the security capability information of the UE, triggers an alarm, and performs other operations, credibility of the UE security capabilities sent by the source cell is further ensured; therefore, instance 4 provides a solution for security processing for the optimized handover.

The above instance 1 to instance 4 are also applicable to the scenario where an X2 interface between the source HeNB and the target HeNB exists, that is, the X2 interface is terminated on the HeNB. In this scenario, step 4 to step 6 in instance 2 to instance 4 should be executed after the HeNB GW receives the path modification request message sent by the target HeNB. The source HeNB and the target HeNB directly communicate, not requiring the HeNB GW for forwarding. The specific execution process is not further described in the instance.

### Instance 5

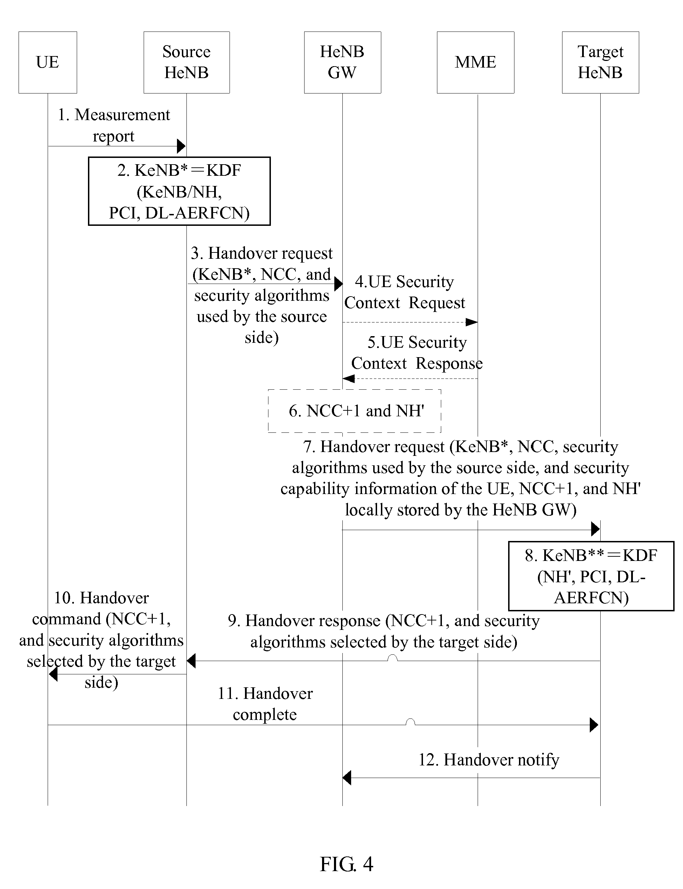

Scenario of instance 5 is a method for security processing in a UE handover process based on an S1 interface under an HeNB, where the procedure of the method is shown in FIG. 4 and includes the following steps:
Step 1: the UE sends a measurement report message to the source HeNB.
Step 2: the source HeNB checks whether locally stored fresh {NCC, NH} values exist, and if so, calculates a KeNB* according to the NH value, or otherwise, calculates a KeNB* according to the KeNB.

The process of calculating a new KeNB* by the source HeNB in step 2 may be described as:
KeNB* = KDF (KeNB/NH, PCI, DL-AERFCN), where KDF (*) indicates a key derivation function, KeNB/NH, PCI, and DL-AERFCN are input parameters of the key derivation function, PCI represents a cell identity of the target HeNB, and DL-AERFCN represents a downlink E-UTRA absolute (radio frequency) channel number (down-link E-UTRA absolute radio frequency channel number).

Step 3: the source HeNB sends a handover request message to the HeNB GW, where the message includes a KeNB* and an NCC, and security algorithms used by the source HeNB.

The security algorithms used by the source HeNB include an integrity protection algorithm used by the source HeNB, an encryption algorithm used by the source HeNB, and so on.

The NCC in the handover request message is an NCC paired with the NH corresponding to the KeNB*, that is, if a fresh NH is used to calculate the KeNB*, the NCC in the handover request message is an NCC paired with the fresh NH; if the KeNB is used to calculate the KeNB*, the NCC in the handover request message is an NCC paired with the NH for calculating the KeNB.

Step 4: the HeNB GW determines, according to the target cell information, that optimized handover processing is required; if the HeNB GW locally stores fresh security parameters of the UE, step 7 is executed; if the HeNB GW does not locally store fresh security parameters of the UE, the HeNB GW sends a UE Security Key Request (UE security context request) message to the MME, where the message carries a UE identity, requesting to obtain the security context of the UE. The UE security context request message sent by the HeNB GW to the MME may further enable synchronization of the UE security context between the HeNB GW and the MME.

In step 4, there are many methods for the HeNB GW to determine that no local fresh security parameter of the UE exists, a specific example of which is as follows: if the HeNB GW determines that no security parameter of the UE is locally stored, the HeNB GW determines that no local fresh security parameter of the UE exists. Another specific example is as follows: if the HeNB GW determines that security parameters of the UE are locally stored and that the NCC in the security parameters of the UE is smaller than the NCC value carried in the handover request message sent by the source HeNB, the HeNB GW may determine that no local fresh security parameter of the UE exists. The embodiment does not limit the specific implementation for the HeNB GW to determine that no local fresh security parameter of the UE exists.

In step 4, the UE security context request message sent by the HeNB GW is specifically defined as:
UE Security Context Request:
   MME UE S1AP ID, eNB UE S1AP ID;

The above definition exemplifies information elements included in the UE security context request message, for example, MME UE S1AP ID, which is used by the MME to identify the UE on the S1 interface, and eNB UE S1AP ID, which is used by the eNB to identify the UE on the S1 interface. The UE security context request message may further include other information elements, which are not limited by the embodiment.

Step 5: the MME returns a UE security context response message to the HeNB GW and implements synchronization between the HeNB GW and the MME, where the UE security context response message may include security parameters of the UE. The security parameters of the UE in the UE security context response message may include fresh security parameters of the UE (such as a fresh NCC and a fresh NH); or may also be non-fresh security parameters of the UE (namely, the NCC and NH delivered to the target eNB of the current handover in the previous handover process), and should further include an input parameter KASME required for calculating the fresh NH. Information elements of the message are defined as follows:
UE security context response:
   MME UE S1AP ID, eNB UE S1AP ID, KASME, NCC, NH, ...;

The above definition exemplifies information elements included in the UE security context response message, for example, MME UE S1AP ID, which is used by the MME to identify the UE on the S1 interface, eNB UE S1AP ID, KASME generated after verification, and NCC and NH. The UE security context request message may further include other information elements, for example, security capability information of the UE, NAS encryption algorithm, integrity protection algorithm, uplink non access stratum message count value NAS COUNT, and downlink NAS COUNT value. The embodiment does not limit the specific information elements included in the UE security context response message.

If the above security context request message is implemented by the conventional handover request (handover required) message, the security context herein may be carried in the conventional handover request (handover request) message. After receiving the message, the HeNB GW extracts UE security context information from the message, and then forwards the handover request message including no UE security context to the target eNB. In this method, it is necessary to add each information element of the UE security context to the handover request (handover request) message.

Step 6: the HeNB GW performs synchronization of the UE security context with the MME according to the received UE security context response message, and executes an operation of updating the stored NCC and NH. The operation may be specifically as follows:
If the message carries non-fresh security parameters, the HeNB GW uses the NCC included in the UE security context response message to perform NCC+1 calculation, and uses the NCC+1 to update the locally stored NCC; the HeNB GW uses the NCC+1 and the NH and KASME included in the UE security context response message to calculate an NH', and uses the NH' to update the locally stored NH. If the message carries a fresh NCC and NH, the HeNB GW uses the NCC and NH included in the UE security context response message as the locally stored NCC and NH.

Step 7: the HeNB GW forwards the handover request message to the target HeNB, where the handover request message includes security capability information of the UE and fresh security parameters (such as the NCC+1 and NH') of the UE locally stored by the HeNB GW, the KeNB* and NCC included in the handover request message received by the HeNB GW, security algorithms used by the source HeNB, and so on.

Step 8: the target HeNB calculates a KeNB** according to the fresh security parameters included in the received handover request message, for example, uses the NH', target cell PCI, and DL-AERFCN as input parameters to obtain the KeNB** by calculation.

Step 9: the target HeNB sends a handover response message to the source HeNB through the HeNB GW, where the handover response message includes fresh security parameters (such as NCC+1) of the UE, an encryption algorithm selected by the target HeNB, an integrity protection algorithm selected by the target HeNB, and so on.

Step 10: the source HeNB sends a handover command message to the UE after receiving the handover response message, where the handover command message includes the fresh security parameters (such as NCC+1) of the UE, an encryption algorithm selected by the target HeNB, an integrity protection algorithm selected by the target HeNB, and so on.

Step 11: after receiving the handover command message, the UE compares the NCC+1 included in the handover command message with the local NCC. Because the comparison result is definitely not the same, the UE updates the local NH according to the NCC+1 included in the handover command message, and uses the updated NH to obtain the KeNB* by calculation. Afterward, the UE uses the KeNB* calculated by the UE and the encryption algorithm and integrity protection algorithm selected by the target HeNB to derive an access stratum encryption key and an integrity protection key, uses the derived encryption key to encrypt the handover complete message, and uses the derived integrity protection key to integrity-protect the handover complete message. Then, the UE sends the integrity-protected and encryption-protected handover complete message to the target HeNB.

Step 12: the target HeNB sends a handover notify message to the HeNB GW after receiving the handover complete message.

Instance 5 is described by using the HeNB and HeNB GW as examples. The method for security processing is also applicable to the application scenario of the Relay and DeNB, which is not further described herein.

As seen from the description of the above instance 5, the target HeNB uses the fresh NH of the UE to calculate the KeNB*, and the UE uses the KeNB* to derive the access stratum key, so that the attacker is unable to derive the key KeNB in the source HeNB according to the key KeNB* in the target HeNB and further obtain the access stratum key used by the UE under the source HeNB, thus implementing backward security. Because the target HeNB uses the fresh NH of the UE in the process of calculating the KeNB*, while the NH is directly delivered by the HeNB GW to the target eNB, the source side is unable to obtain the KeNB* calculated by the target eNB. Therefore, the embodiment may implement forward security (that is, the attacker is unable to derive the key used by the target HeNB of the handover according to the key used by the source HeNB). In the embodiment, the HeNB GW requests the MME for a UE security context, and the HeNB GW performs updating and delivering of the NCC and NH, thus ensuring security during a handover while reducing the optimized handover process that the MME participates in. Therefore, instance 5 provides a solution for security processing for the optimized handover.

It is understandable that the method for the HeNB GW to send a security context request message to the MME and obtain fresh security parameters in instance 5 may also be the same as step 4 to step 6 in the above instance 3 and instance 4, and is not further described herein.

### Instance 6

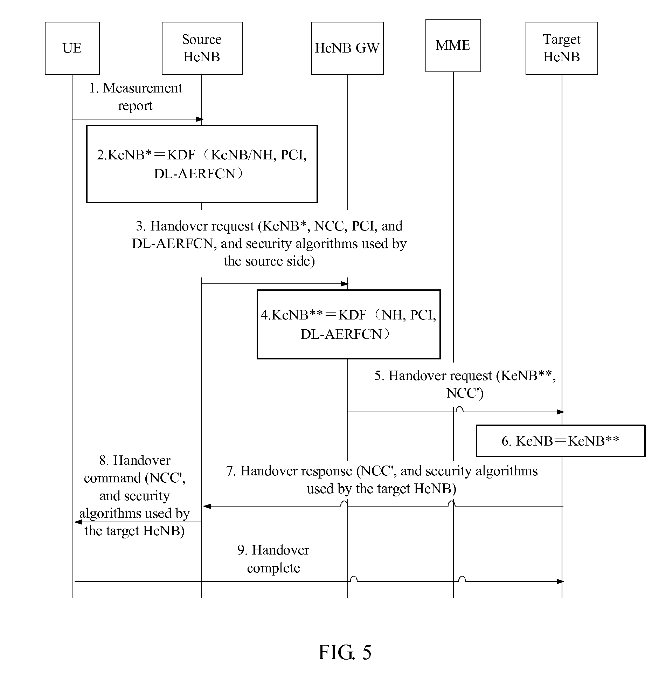

Scenario: the HeNB GW stores a fresh {NCC, NH} pair, and when executing an optimized handover, the HeNB GW uses its stored {NCC, NH} pair to implement forward security of the handover. For the method for the HeNB GW to obtain a fresh {NCC, NH} pair, reference may be made to the instance 3. For the method for the HeNB GW to use its stored fresh {NCC, NH} pair to implement forward security of the handover, reference may be made to FIG. 5. Specifically, the following steps are included:
Step 1: the UE sends a measurement report to the source HeNB.
Step 2: the source HeNB calculates the KeNB* locally; if fresh security parameters of the UE exist, the source HeNB calculates a new access stratum root key KeNB* according to the NH in the fresh security parameters; otherwise, the source HeNB calculates the KeNB* according to the old access stratum root key KeNB.

The process of calculating a new KeNB* by the source HeNB may be described as:
KeNB* = KDF (KeNB/NH, PCI, DL-AERFCN), where KDF (*) indicates a key derivation function, KeNB, PCI, and DL-AERFCN are input parameters of the key derivation function, PCI represents a cell identity of the target HeNB, DL-AERFCN represents a downlink E-UTRA absolute (radio frequency) channel number (down-link E-UTRA absolute radio frequency channel number), and KeNB is the old access stratum root key.

Step 3: the source HeNB sends a handover request message to the HeNB GW, where the message includes a KeNB* and corresponding NCC, and security algorithms (including an integrity protection algorithm and an encryption algorithm) used by the source side.

Alternatively, for the HeNB GW to use its stored fresh {NCC, NH} pair to calculate the KeNB*, the handover request message sent by the source HeNB may further include a PCI and DL-AERFCN of the target cell.

Step 4: the HeNB GW determines, according to the target cell information, that an optimized handover is required; therefore, the HeNB GW may further determine whether it is necessary to calculate a new access stratum root key for the target HeNB by using the stored fresh {NCC, NH} pair; if the HeNB GW decides to perform calculation, the HeNB GW locally calculates a KeNB** according to the NH in the locally stored fresh {NCC, NH} pair, and the PCI and DL-AERFCN of the target cell.

The PCI and DL-AERFCN may be directly carried in the handover request message sent by the source HeNB; or the handover request message carries the PCI of the target cell, and the HeNB GW locally obtains the DL-EARFCN according to the PCI. The scenario where the HeNB GW decides not to perform calculation is described in the following instance 7.

The HeNB GW may determine, according to the comparison between the NCC carried in the handover request message received from the source HeNB and the locally stored NCC, whether the locally stored {NCC, NH} pair is fresh; if the NCC in the locally stored {NCC, NH} pair is smaller than the NCC carried in the handover request message, the {NCC, NH} pair is not fresh; and if the locally stored {NCC, NH} is not fresh, the HeNB GW may delete the {NCC, NH} pair.

Step 5: the HeNB GW forwards the handover request message to the target HeNB, where the message carries the KeNB** calculated by the HeNB GW and the corresponding NCC', and the security capability information of the UE locally stored by the HeNB GW; and may further carry the KeNB* calculated by the source HeNB and the corresponding NCC', and security algorithms used by the source HeNB.

Step 6: the target HeNB uses the received KeNB** as a local KeNB, and stores the KeNB** in association with the NCC'.

Step 7: the target HeNB sends a handover response message to the source HeNB through the HeNB GW, where the message includes an NCC' and the security algorithms selected by the target HeNB.

Step 8: the source HeNB sends a handover command message to the UE, where the message includes an NCC' and the security algorithms selected by the target HeNB.

Step 9: the UE sends a handover complete message to the target HeNB; up to now, the handover preparation and handover execution process are complete. For the specific operation process of the UE in this step, reference may be made to the description in instance 5, and no further description is provided herein.

The above steps 1-9 complete the handover preparation and handover execution process. The target HeNB may send a path modification request message to the HeNB GW after receiving the handover complete message; the HeNB GW forwards the message to the MME; the HeNB GW intercepts the fresh NCC and NH values from the path modification ACK message sent by the MME, and stores them locally as fresh NCC and NH values for the next optimized handover; the HeNB GW forwards the path modification ACK message including no fresh NCC and NH to the target HeNB.

The method for security processing described in the instance may also be applicable to the application scenario of the Relay and DeNB, which is not further described herein.

As seen from the description of the above instance 6, the target HeNB uses the fresh NH of the UE to calculate the KeNB*, and the UE uses the KeNB* to derive the access stratum key, so that the attacker is unable to derive the key KeNB in the source HeNB according to the key KeNB* in the target HeNB and further obtain the access stratum key used by the UE under the source HeNB, thus implementing backward security. Because the KeNB* obtained by the target HeNB is calculated by the HeNB GW according to the fresh NH, the source side is unable to obtain the KeNB* in the target HeNB. Therefore, the embodiment may implement forward security (that is, the attacker is unable to derive the key used by the target HeNB of the handover according to the key used by the source HeNB); the embodiment ensures security during the handover, and provides a solution for security processing for the optimized handover.

### Instance 7

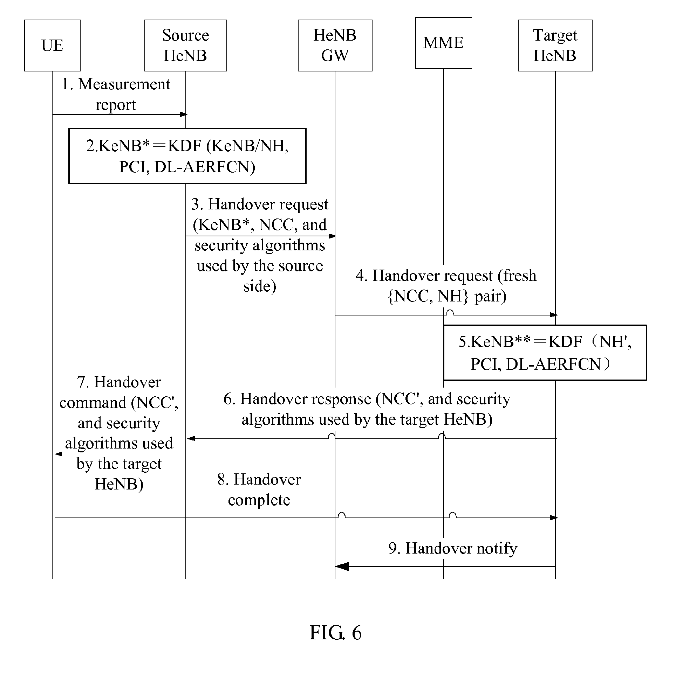

Scenario: the HeNB GW stores a fresh {NCC, NH} pair, and when executing an optimized handover, the HeNB GW sends its stored {NH, NCC} pair to the target HeNB; the target HeNB calculates the key according to the NH to implement forward security of the handover. For the method for the HeNB GW to obtain a fresh {NCC, NH} pair, reference may be made to the description in the instance 3. As shown in FIG. 6, the following steps are included:
Step 1: the UE sends a measurement report to the source HeNB.
Step 2: the source HeNB locally calculates a KeNB*, where the calculation method is the same as that in instance 6, and is not further described herein.
Step 3: the source HeNB sends a handover request message to the HeNB GW, where the message includes a KeNB* and corresponding NCC, and security algorithms used by the source side.
Step 4: the HeNB GW determines, according to the target cell information, that an optimized handover is required; therefore the HeNB GW may further determine whether it is necessary to calculate a key for the target HeNB; if the HeNB GW decides not to perform calculation, the HeNB GW forwards the handover request message to the target HeNB, where the message carries a fresh {NCC, NH} pair locally stored by the HeNB GW and security capability information of the UE locally stored by the HeNB GW; and may further carry the KeNB* calculated by the source HeNB and corresponding NCC, and security algorithms used by the source HeNB.

The HeNB GW may determine, according to the comparison between the NCC carried in the handover request message received from the source HeNB and the locally stored NCC, whether the locally stored {NCC, NH} pair is fresh; if the NCC in the locally stored {NCC, NH} pair is smaller than the NCC carried in the handover request message, the {NCC, NH} pair is not fresh; and if the locally stored {NCC, NH} is not fresh, the HeNB GW may delete the {NCC, NH} pair.

Step 5: the target HeNB calculates a KeNB** according to the NH in the fresh {NCC, NH} pair, uses the KeNB** as a local KeNB, and stores the KeNB** in association with the corresponding NCC'.

Step 6: the target HeNB sends a handover response message to the source HeNB through the HeNB GW, where the message includes an NCC' and the security algorithms used by the target HeNB.

Step 7: the source HeNB sends a handover command message to the UE, where the message includes an NCC'.

Step 8: the UE sends a handover complete message to the target HeNB; for the specific operation process of the UE in this step, reference may be made to the description in instance 5, and no further description is provided herein.

Step 9: the target HeNB sends a handover notify message to the HeNB GW; up to now, the handover preparation and handover execution process are complete. Step 9 is a step for an S1 handover; in case of an X2 handover, step 9 does not need to be executed.

The above steps 1-9 complete the handover preparation and handover execution process. The target HeNB may send a path modification request message to the HeNB GW after receiving the handover complete message; the HeNB GW forwards the message to the MME; the HeNB GW intercepts the fresh NCC and NH values from the path modification ACK message sent by the MME, and stores them locally as fresh NCC and NH values for the next optimized handover; the HeNB GW forwards the path modification ACK message including no fresh NCC and NH to the target HeNB.

The method for security processing described in the instance may also be applicable to the application scenario of the Relay and DeNB, which is not further described herein.

As seen from the description of the above instance 6, the target HeNB uses the fresh NH of the UE to calculate the KeNB*, and the UE uses the KeNB* to derive the access stratum key, so that the attacker is unable to derive the key KeNB in the source HeNB according to the key KeNB* in the target HeNB and further obtain the access stratum key used by the UE under the source HeNB, thus implementing backward security. Because the target HeNB uses the fresh NH of the UE in the process of calculating the KeNB*, while the NH is directly delivered by the HeNB GW to the target eNB, the source side is unable to obtain the KeNB* calculated by the target HeNB. Therefore, the embodiment may implement forward security (that is, the attacker is unable to derive the key used by the target HeNB of the handover according to the key used by the source HeNB); the embodiment ensures security during the handover, and provides a solution for security processing for the optimized handover.

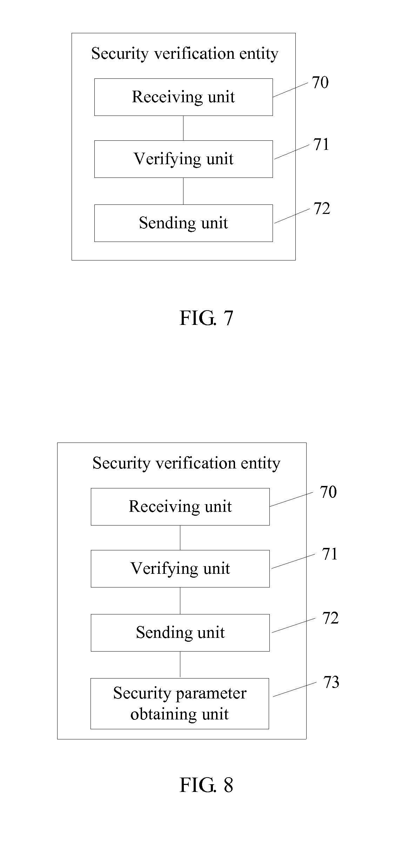

Embodiment 2 of the present invention provides a security verification entity, where the security verification entity in the embodiment may be a gateway in case of user equipment UE handover under a NodeB or a donor NodeB in case of UE handover under a relay. As shown in FIG. 7, the security verification entity includes:
a receiving unit 70, configured to receive a path modification request message sent by a target node, where the path modification request message carries security capability information of the UE provided by a source node to the target node;
a verifying unit 71, configured to verify whether the security capability information of the UE carried in the path modification request message is consistent with locally stored security capability information of the UE; and
a sending unit 72, configured to send a path modification ACK message to the target node if it is verified that the security capability information of the UE carried in the path modification request message is consistent with the locally stored security capability information of the UE.

As shown in FIG. 8, the security verification entity may further include:
a security parameter obtaining unit 73, configured to obtain fresh security parameters reserved for a next handover; where
the sending unit 72 carries the fresh security parameters reserved for the next handover in the sent path modification ACK message.

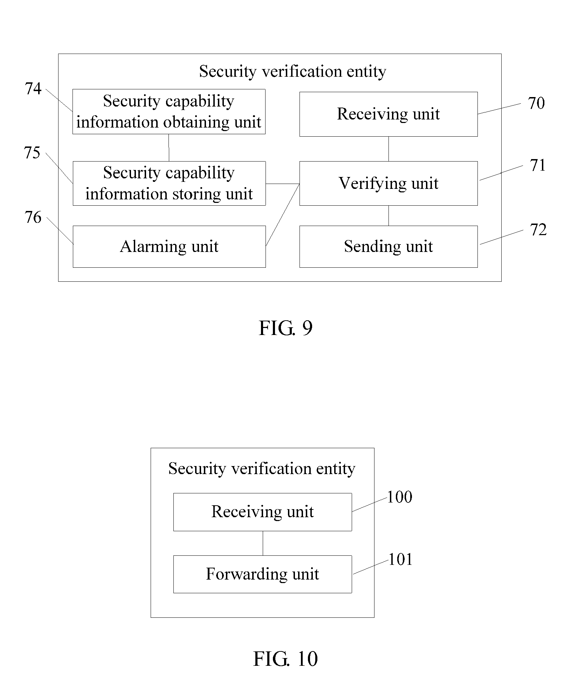

As shown in FIG. 9, the security verification entity may further include:
a security capability information obtaining unit 74, configured to obtain security capability information of the UE from a handover message or an initial context setup request message sent by a core network entity; and
a security capability information storing unit 75, configured to store the security capability information of the UE; where
the verifying unit 71 obtains the locally stored security capability information of the UE from the security capability information storing unit.

The security verification entity may further include:
an alarming unit 76, configured to start an alarm process if the verifying unit verifies that the security capability information of the UE carried in the path modification request message is inconsistent with the security capability information of the UE locally stored by the security verification entity.

The security verification entity provided by the embodiment of the present invention may verify the security capability information of the UE provided by the source node and trigger an alarm, ensuring credibility of the security capability information of the UE sent by the source node. Therefore, the target node can select appropriate security algorithms, thus further improving security of the optimized handover process. In addition, the security verification entity verifies the security capability information of the UE, triggers an alarm, and performs other operations, and therefore, security of the cell is ensured to some extent without requiring the core network node to participate in the optimized handover process.

Embodiment 3 of the present invention provides a system for security processing in a handover process, where the system includes: a source node, a target node, and the security verification entity described in embodiment 2.

The target node obtains security capability information of a UE provided by the source node in a handover preparation and handover execution process.

The security verification entity compares the security capability information of the UE provided by the source node with locally stored security capability information of the UE to verify whether the security capability information of the UE provided by the source node is secure. For the specific structure and function of the security verification entity, reference may be made to the above embodiment, and no further description is provided herein.

In the system provided by the embodiment of the present invention, the security verification entity verifies the security capability information of the UE provided by the source node to the target node and triggers an alarm, ensuring credibility of the security capability information of the UE sent by the source node. Therefore, the target node can select appropriate security algorithms, thus further improving security of the optimized handover process. In addition, the security verification entity verifies the security capability information of the UE, triggers an alarm, and performs other operations, and therefore, security of the cell is ensured to some extent without requiring the core network node to participate in the optimized handover process.

Embodiment 4 of the present invention provides a security verification entity, where the security verification entity in the embodiment may be a gateway in case of user equipment UE handover under a NodeB or a donor NodeB in case of UE handover under a relay node. As shown in FIG. 10, the security verification entity includes:
a receiving unit 100, configured to receive a handover request message sent by a source node; and
a forwarding unit 101, configured to forward the handover request message to a target node, and carry security capability information of the UE locally stored by the security verification entity in the forwarded handover request message.

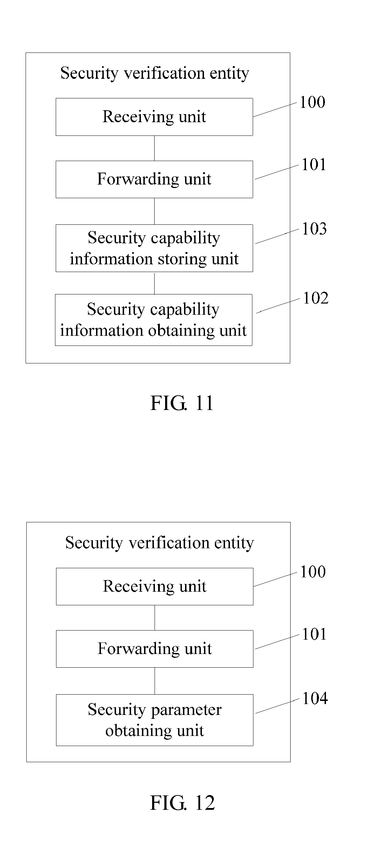

As shown in FIG. 11, the security verification entity may further include:
a security capability information obtaining unit 102, configured to obtain security capability information of the UE from a handover message or an initial context setup request message sent by a core network entity; and
a security capability information storing unit 103, configured to store the security capability information of the UE; where
the forwarding unit 101 obtains the locally stored security capability information of the UE from the security capability information storing unit 103.

As shown in FIG. 12, the security verification entity may further include:
a security parameter obtaining unit 104, configured to obtain fresh security parameters, where the fresh security parameters include a fresh next-hop chaining counter NCC and a next hop NH value; where
the forwarding unit 101 carries the fresh security parameters in the forwarded handover request message.

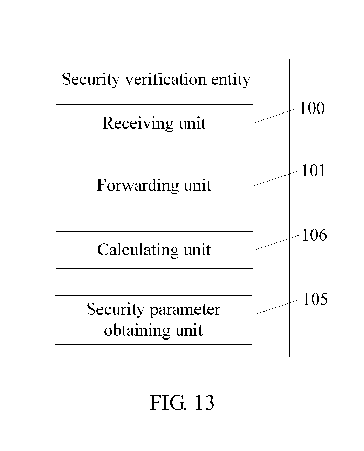

As shown in FIG. 13, the security verification entity may further include:
a security parameter obtaining unit 105, configured to obtain fresh security parameters;
   and
a calculating unit 106, configured to calculate an access stratum root key according to the fresh security parameters; where
the forwarding unit 101 carries the access stratum root key and a corresponding NCC calculated by the calculating unit in the forwarded handover request message.

The security verification entity in the embodiment of the present invention may provide security capability information of the UE to the target node, so that the target node obtains the reliable security capability information of the UE; therefore, the target node can select appropriate security algorithms, thus further improving security of the optimized handover process. In addition, the security verification entity obtains fresh security parameters and provides the fresh security parameters to the target node, and therefore security of the cell is ensured to some extent without requiring the core network node to participate in the optimized handover process.

Embodiment 5 of the present invention provides a system for security processing in a handover process, where the system includes a source node, a target node, and the security verification entity described in embodiment 4.

The security verification entity provides security capability information of a UE to the target node in a handover preparation process. For the specific structure and function of the security verification entity, reference may be made to embodiment 4, and no further description is provided herein.

In the system of the embodiment of the present invention, the security verification entity provides security capability information of the UE to the target node, so that the target node obtains the reliable security capability information of the UE; therefore, the target node can select appropriate security algorithms, thus further improving security of the optimized handover process. In addition, the security verification entity obtains fresh security parameters and provides the fresh security parameters to the target node, and therefore security of the cell is ensured to some extent without requiring the core network node to participate in the optimized handover process.

To sum up, in the embodiments of the present invention, in an optimized handover process, the target node obtains reliable security capability information of the UE provided by the security verification entity, or the target node obtains security capability information of the UE provided by the source node and then the security verification entity verifies the security capability information of the UE provided by the source node and triggers an alarm, ensuring credibility of the security capability information of the UE sent by the source node. Therefore, the target node can select appropriate security algorithms, thus further improving security of the optimized handover process.

In addition, in the embodiments of the present invention, the security verification entity verifies security capability information of the UE or updates fresh security parameters, and therefore the optimized handover process that the core network node participates in may be reduced.

According to the description of the foregoing embodiments, those skilled in the art are clearly aware that the present invention may be implemented by hardware, or, preferably in most circumstances, by software in addition to a necessary universal hardware platform. Based on such understanding, all or a part of the technical solutions of the present invention that contribute to the prior art can be embodied by a software product, which can be used to execute the above method procedure. The computer software product may be stored in a storage medium such as a ROM/RAM, a magnetic disk, or a CD-ROM, and incorporate several instructions for instructing a computer device (such as a personal computer, a server, or a network device) to execute the method specified in any embodiment of the present invention or a part of the embodiment.

Although the present invention has been described through some exemplary embodiments, the present invention is not limited to such embodiments. It is apparent that persons of ordinary skill in the art can make various modifications and variations to the present invention without departing from the spirit and scope of the present invention. The present invention is intended to cover the modifications and variations provided that they fall within the scope of protection defined by the appended claims or equivalents thereof.

## Claims

1. A method for security processing in a handover process, wherein the method comprises:
in a handover preparation and handover execution processes performed by a user equipment UE and a source node and a target node on a network side, obtaining, by the target node, security capability information of the UE provided by the source node or a security verification entity, wherein the security verification entity comprises a gateway in case of UE handover under a NodeB or a donor NodeB in case of UE handover under a relay node; and
if the target node obtains the security capability information of the UE provided by the source node, the method further comprises:
sending, by the target node, a path modification request message to the security verification entity, wherein the path modification request message carries the obtained security capability information of the UE; and sending, by the security verification entity, a path modification ACK message to the target node if the security verification entity verifies that the security capability information of the UE carried in the path modification request message is consistent with locally stored security capability information of the UE.

2. The method according to claim 1, wherein the source node and the target node comprise a base station in case of UE handover under a base station or a relay in case of UE handover under a relay.

3. The method according to claim 1, further comprising:
if the security capability information of the UE carried in the path modification request message is inconsistent with the security capability information of the UE locally stored by the security verification entity, starting an alarm process.

4. The method according to claim 1, wherein a method for providing the security capability information of the UE by the security verification entity comprises:
forwarding, by the security verification entity, a handover request message sent by the source node to the target node, wherein the forwarded handover request message carries the security capability information of the UE locally stored by the security verification entity.

5. The method according to claim 4, wherein the forwarded handover request message further comprises a new access stratum root key and a corresponding next-hop chaining counter NCC' calculated by the security verification entity according to fresh security parameters, and the method further comprises:
storing, by the target node, the new access stratum root key calculated by the security verification entity according to the fresh security parameters, in association with a corresponding NCC'; wherein
the fresh security parameters comprise a fresh NCC and next hop NH value.

6. The method according to claim 5, wherein a method for calculating the new access stratum root key by the security verification entity according to the fresh security parameters comprises:
calculating, by the security verification entity, the new access stratum root key according to a physical cell identity PCI of a target cell, a downlink E-UTRA absolute radio frequency channel number DL-EARFCN of the target cell, and the NH in the fresh {NCC, NH} pair, wherein the PCI and DL-EARFCN of the target node are obtained from the handover request message sent by the source node, or the PCI of the cell of the target node is obtained from the handover request message sent by the source node, and the DL-EARFCN is obtained locally according to the PCI obtained from the handover request message.

7. The method according to claim 4, wherein the forwarded handover request message further comprises fresh security parameters provided by the security verification entity, and the method further comprises:
calculating, by the target node, a new access stratum root key according to the fresh security parameters carried in the handover request message.

8. The method according to claim 4, 5, or 7, wherein the forwarded handover request message further comprises a security algorithm used by the source node, and a new access stratum root key and a corresponding NCC calculated by the source node.

9. The method according to claim 1, wherein the path modification ACK message sent by the security verification entity carries fresh security parameters reserved for a next handover, and the target node stores the fresh security parameters.

10. The method according to claim 5, 7, or 9, wherein a method for obtaining the fresh security parameters by the security verification entity comprises:
sending, by the security verification entity, a UE security context request message to a core network node, wherein the message comprises a UE identity; and
receiving a UE security context response message sent by the core network node, wherein the UE security context response message comprises the fresh NCC and NH and an input parameter, key of access security management entity KASME, which is required for calculating the fresh NH, or comprises an NCC and NH currently used by the UE and an input parameter KASME required for calculating the fresh NH; and obtaining the fresh NCC by calculation according to the NCC currently used by the UE, and obtaining the fresh NH by calculation according to the NH currently used by the UE and the KASME.

11. The method according to claim 5, 7, or 9, wherein a method for obtaining the fresh security parameters by the security verification entity comprises:
storing, by the security verification entity, a non-fresh NCC and NH, and sending a UE security context request message to a core network node, wherein the message comprises a UE identity; receiving a UE security context response message sent by the core network node, wherein the UE security context response message comprises an input parameter KASME required for calculating the fresh NH; storing the KASME; and obtaining the fresh NCC by calculation according to the non-fresh NCC, and obtaining the fresh NH by calculation according to the non-fresh NH and KASME, wherein the stored non-fresh NCC and NH are obtained by the security verification entity from a path modification ACK message or handover request message sent by the core network node in a previous handover process that the core network node participates in;
or
storing, by the security verification entity, a non-fresh NCC and NH, and an input parameter KASME required for calculating the fresh NH, calculating the fresh NCC according to the non-fresh NCC, and obtaining the fresh NH by calculation according to the non-fresh NH and KASME, wherein the stored non-fresh NCC and NH are obtained by calculation by the security verification entity in a previous handover process of the UE.

12. The method according to claim 5, 7, or 9, wherein the fresh security parameters use NCC values and corresponding NH values in ascending order of NCC values from an {NCC, NH} list stored by the security verification entity; and after all NCCs and NHs in the {NCC, NH} list are used, or when no fresh NCC or NH exists in the security verification entity, the security verification entity obtains the {NCC, NH} list, wherein a method for obtaining the {NCC, NH} list by the security verification entity comprises:
sending, by the security verification entity, a UE security context request message to a core network node, wherein the message comprises a UE identity;
receiving a UE security context response message sent by the core network node, wherein the UE security context response message comprises an {NCC, NH} list, wherein the {NCC, NH} list comprises a current NCC and NH of the core network node, and NCCs of a first next hop to an nth next hop and corresponding NHs calculated by the core network node, wherein n is a natural number greater than 1; and
storing, by the security verification entity, the {NCC, NH} list.

13. The method according to claim 12, wherein if the {NCC, NH} list stored by the security verification entity comprises unused fresh security parameters, the UE executes a normal handover that the core network node participates in, and therefore, the core network node uses locally stored newest security parameters to perform security processing, and synchronizes the newest security parameters with the UE through a handover command.

14. The method according to claim 5, 7, or 9, wherein a method for obtaining the fresh security parameters by the security verification entity comprises:
intercepting, by the security verification entity in a security processing process of a previous optimized handover, the fresh security parameters from a path modification ACK message sent by a core network node to the target node.

15. The method according to claim 1 or 4, wherein a method for obtaining the security capability information of the UE locally stored by the security verification entity comprises:
obtaining, by the security verification entity, the security capability information of the UE from a handover message sent by a core network entity to the security verification entity; or
obtaining, by the security verification entity, the security capability information of the UE from an initial context setup request message sent by the core network entity.

16. A security verification entity, wherein the security verification entity is a gateway in case of user equipment UE handover under a NodeB or a donor NodeB in case of UE handover under a relay node; and the security verification entity comprises:
a receiving unit, configured to receive a path modification request message sent by a target node, wherein the path modification request message carries security capability information of a UE provided by a source node to the target node;
a verifying unit, configured to verify whether the security capability information of the UE carried in the path modification request message is consistent with locally stored security capability information of the UE; and
a sending unit, configured to send a path modification ACK message to the target node if it is verified that the security capability information of the UE carried in the path modification request message is consistent with the locally stored security capability information of the UE.

17. The security verification entity according to claim 16, further comprising:
a security parameter obtaining unit, configured to obtain fresh security parameters reserved for a next handover;
the sending unit carries the fresh security parameters reserved for the next handover in the sent path modification ACK message.

18. The security verification entity according to claim 16, further comprising:
a security capability information obtaining unit, configured to obtain security capability information of the UE from a handover message or an initial context setup request message sent by a core network entity; and
a security capability information storing unit, configured to store the security capability information of the UE;
the verifying unit obtains the locally stored security capability information of the UE from the security capability information storing unit.

19. The security verification entity according to any one of claims 16 to 18, further comprising:
an alarming unit, configured to start an alarm process if the verifying unit verifies that the security capability information of the UE carried in the path modification request message is inconsistent with the security capability information of the UE locally stored by the security verification entity.

20. A security verification entity, wherein the security verification entity is a gateway in case of user equipment UE handover under a NodeB or a donor NodeB in case of UE handover under a relay node; and the security verification entity comprises:
a receiving unit, configured to receive a handover request message sent by a source node; and
a forwarding unit, configured to forward the handover request message to a target node, and carry security capability information of the UE locally stored by the security verification entity in the forwarded handover request message.

21. The security verification entity according to claim 20, further comprising:
a security capability information obtaining unit, configured to obtain security capability information of the UE from a handover message or an initial context setup request message sent by a core network entity; and
a security capability information storing unit, configured to store the security capability information of the UE; wherein
the forwarding unit obtains the locally stored security capability information of the UE from the security capability information storing unit.

22. The security verification entity according to claim 20 or 21, further comprising:
a security parameter obtaining unit, configured to obtain fresh security parameters, wherein the fresh security parameters comprise: a fresh next-hop chaining counter NCC and a next hop NH value; wherein
the forwarding unit carries the fresh security parameters in the forwarded handover request message.

23. The security verification entity according to claim 20 or 21, further comprising:
a security parameter obtaining unit, configured to obtain fresh security parameters; and
a calculating unit, configured to calculate an access stratum root key according to the fresh security parameters;
the forwarding unit carries the access stratum root key and a corresponding NCC calculated by the calculating unit in the forwarded handover request message.

24. A system for security processing in a handover process, wherein: the system comprises a source node, a target node, and the security verification entity according to any one of claims 16 to 19;
the target node obtains security capability information of a UE provided by the source node in a handover preparation and handover execution processes; and
the security verification entity compares the security capability information of the UE provided by the source node with locally stored security capability information of the UE to verify whether the security capability information of the UE provided by the source node is secure.

25. A system for security processing in a handover process, wherein: the system comprises a source node, a target node, and the security verification entity according to any one of claims 20 to 23; and
the security verification entity provides security capability information of a UE to the target node in a handover preparation process.
